# EUROPEAN PATENT APPLICATION

(11) **EP 2 574 504 A1**
(43) Date of publication of application: **03.04.2013**
(21) Application number: 12186592.7
(22) Date of filing: 28.09.2012
(51) Int. Cl.: B60R 1/074

(54) **Vehicle outside mirror device**

(30) Priority: 30.09.2011 JP 2011217036
(71) Applicant: Ichikoh Industries, Ltd., Kanagawa 259-1192 (JP)
(72) Inventor: Sakata, Ikuo, Isehara-shi, Kanagawa 259-1192 (JP)
(74) Representative: Grünecker, Kinkeldey, Stockmair & Schwanhäusser

(57) **Abstract**

The present invention is provided with a shaft (10 , a gear case (11) , a set of a motor (13), a deceleration mechanism (14), and a clutch mechanism (15), an electrically driven rotation range restricting mechanism (33, 34, 43, 44), and a holding mechanism (6). The holding mechanism is provided between a shaft and a casing. This holding mechanism is established in a noncontact state with respect to the shaft and the casing in a range in which a mirror assembly rotates between a use location and a storage location, and is established in a contact state with respect to the shaft and casing so as to hold the mirror assembly in the use location when the mirror assembly is positioned in the use location. As a result, the present invention is compatible with hindering applying of a load to an electrically driven storage unit and holding the mirror assembly in such a manner as to be free of vibration.

## Description

### CROSS REFERENCE TO RELATED APPLICATIONS

This application claims priority of Japanese Patent Application No. 2011-217036 filed on September 30, 2011. The contents of this application are incorporated herein by reference in their entirety.

### BACKGROUND OF THE INVENTION

### 1. Field of the Invention

The present invention relates to a vehicle outside mirror device enabling a mirror assembly to be mounted to enable rotation (tilting or turning) on a vehicle body via an electrically driven storage unit and a base. In other words, the present invention relates to a vehicle outside mirror device such as an electrically storage type door mirror, for example.

### 2. Description of the Related Art

A vehicle outside mirror device of such a type is conventionally known (for example, Japanese Unexamined Patent Application Publication No. 2001-287594). Hereinafter, a conventional vehicle outside mirror device will be described. The conventional vehicle outside mirror device is provided in such a manner that a storage mechanism causes a casing to rotate with respect to a stand, thereby rotating a mirror between an erected location and a storage location.

In such a vehicle outside mirror device, it is important to hold a mirror without applying of a load to a storage mechanism when rotating the mirror between an erected location and a storage location and to hold a mirror in such a manner as to be free of vibration when positioning the mirror in the erected location.

However, in the conventional outside mirror device described previously, there is not provided a means for holding the mirror without applying of a load to the storage mechanism when rotating the mirror between the erected location and the storage location and for holding a mirror in such a manner as to be free of vibration when positioning the mirror in the erected location. Therefore, if the conventional vehicle outside mirror device described previously is configured to hold a mirror in such a manner as to be free of vibration, a load has been applied to the storage mechanism, whereas if the mirror device is configured in such a manner as to avoid applying of a load to the storage mechanism, it has been impossible to hold the mirror in such a manner as to be free of vibration.

The present invention has been made in order to solve a problem that it has been difficult for the conventional vehicle outside mirror device to be compatible with hindering applying of a load to a storage mechanism while holding a mirror in such a manner as to be free of vibration.

### SUMMARY OF THE INVENTION

In first aspect of the present invention, a vehicle outside mirror device in which a mirror assembly is rotatably mounted to a vehicle body via an electrically driven storage unit and a base, wherein
the electrically driven storage unit comprising:
a shaft that is fixed to the base;
a casing which is rotatably mounted to the shaft, and to which the mirror assembly is mounted;
a motor and a rotation force transmission mechanism that are housed in the casing, and electrically drive the mirror assembly to rotate at least between a use location and a storage location with respect to the shaft;
an electrically driven rotation range restricting mechanism adapted to restrain a range of electrically driven rotation of the mirror assembly between the use location and the storage location;
a clutch mechanism that is provided in the rotation force transmission mechanism, the clutch mechanism being disallowed to be disengaged with an electrically driven rotation force of the motor and the rotation force transmission mechanism, the clutch mechanism being allowed to be disengaged by means of a force that is greater than the electrically driven rotation force so as to enable the mirror assembly to rotate with respect to the shaft; and
a holding mechanism that is provided between the shaft and the casing, the holding mechanism being established in a noncontact state with respect to the shaft and the casing in a range in which the mirror assembly rotates between the use location and the storage location, the holding mechanism being established in a contact state with respect to the shaft and the casing so as to hold the mirror assembly in the use location when the mirror assembly is positioned in the use location.

The vehicle outside mirror device of second aspect according to the present invention, comprising a buffering mechanism adapted to release a contact state between the holding mechanism and the casing by means of a force that is greater than the electrically driven rotation force and that is smaller than a clutch force of the clutch mechanism when the mirror assembly is rotated from the use location to the storage location side or on an opposite side to the storage location for a sake of buffering.

A vehicle outside mirror device according to the first aspect of the present invention is provided in such a manner that, in a range in which a mirror assembly rotates between a use location and a storage location, a holding mechanism is established in a noncontact state with respect to a shaft and a casing; and therefore, the mirror assembly is capable of smoothly rotating without a load between the use location and the storage location, and no load is applied to an electrically driven storage unit. On the other hand, when the mirror assembly is positioned in the use location, the holding mechanism is established in a contact state with respect to the shaft and the casing, the mirror assembly is reliably held in such a manner as to be free of vibration in the use location. In this manner, the vehicle outside mirror device according to the first aspect of the present invention is compatible with hindering applying of a load to an electrically driven storage unit and holding a mirror assembly in such a manner as to be free of vibration.

A vehicle outside mirror device according to the second aspect of the present invention is provided in such a manner that, if a greater force than a clutch force of a clutch mechanism acts on a mirror assembly by means of the clutch mechanism, the mirror assembly rotates from a use location to a storage location side or an opposite side to the storage location (a forward tilt location side) for the sake of buffering. Therefore, the mirror assembly can be protected from an impact. Moreover, the vehicle outside mirror device according to the second aspect of the present invention is provided in such a manner that, when the mirror assembly rotates for the sake of buffering, a contact state between a holding mechanism and a casing is released by means of an action of a buffering mechanism at a force that is greater than an electrically driven rotation force and that is smaller than the clutch force of the clutch mechanism; and therefore, the mirror assembly can be electrically driven to be rotated from the forward tilt location to the use location, or alternatively, from the storage location to the use location, without applying a load to the electrically driven storage unit.

### BRIEF DESCRIPTION OF THE DRAWINGS

FIG. 1 is a plan view of a use state showing an embodiment of a vehicle outside mirror device according to the present invention (an electrically driven storage type door mirror device equipped on a right side door of an automobile);
FIG. 2 is an exploded perspective view showing the electrically driven storage unit;
FIG. 3 is a perspective view showing the electrically driven storage unit in a state in which a casing is partially omitted;
FIG. 4 is a partial explanatory plan view showing a noncontact state among a holding mechanism, a shaft, and the casing;
FIG. 5 is a partial explanatory plan view showing a noncontact state among the holding mechanism, the shaft, and the casing;
FIG. 6 is a partial longitudinal cross section showing a noncontact state among the holding mechanism, the shaft, and the casing (a cross section taken along the line VI-VI in FIG. 4);
FIG. 7 is a partial longitudinal cross section showing a contact state among the holding mechanism, the shaft, and the casing (a cross section taken along the line VII-VII in FIG. 5);
FIG. 8 is a partial longitudinal cross section (a partial vertical cross section) showing essential portions in a state in which the holding mechanism and the shaft are respectively established in a contact state, and on the other hand, the holding mechanism and the casing are established in a noncontact state;
FIG. 9 is an explanatory view showing an actuation state of electrically driven rotation range restricting mechanisms that are equipped on a stopper member and a shaft holder;
FIG. 10 is a view taken along the direction as indicated by the arrow X in FIG. 2, showing a bottom face of the stopper member;
FIG. 11 is a view taken along the direction as indicated by the arrow XI in FIG. 2 showing a plane of the shaft holder;
FIG. 12 is an explanatory plan view showing an actuation state of the electrically driven rotation range restricting mechanisms that are equipped on the stopper member and the shaft holder;
FIG. 13 is a perspective view showing a state in which the casing is seen from a diagonal lower side;
FIG. 14 is a view taken along the direction as indicated by the arrow XIV in FIG. 2, showing a bottom face of the casing;
FIG. 15 is a view taken along the direction as indicated by the arrow XV in FIG. 2, showing a plane of the stopper member;
FIG. 16 is an explanatory plan view showing an actuation state of the electrically driven rotation range restricting mechanisms that are equipped on the stopper member and the shaft holder and an actuation state of a buffering mechanism that is provided between the stopper member and the casing;
FIG. 17 is an explanatory view showing: a state in which a force is applied from a rear side to a front side to a mirror assembly that is positioned in a use location and then the mirror assembly is positioned in a forward tilt location; an actuation state of the electrically driven rotation range restricting mechanisms that are equipped on the stopper member and the shaft holder; an actuation state of the buffer mechanism that is provided between the stopper member and the casing; and an actuation state of a clutch mechanism;
FIG. 18 is a plan view showing an electrically driven storage unit in a state in which a cover is removed;
FIG. 19 is an explanatory front view showing a state in which an engagement portion of the stopper member of the buffering mechanism and an engagement portion of the casing disengage from each other at the time of buffering of forward tilting; and
FIG. 20 is an explanatory front view showing a state in which the clutch mechanism disengages at the time of buffering of forward tilting.

### DESCRIPTION OF THE PREFERRED EMBODIMENTS

Hereinafter, the exemplary embodiments of a vehicle outside mirror device according to the present invention will be described in detail with reference to the drawings. It is to be noted that the present invention is not limited by these embodiments.

### (Description of Configuration)

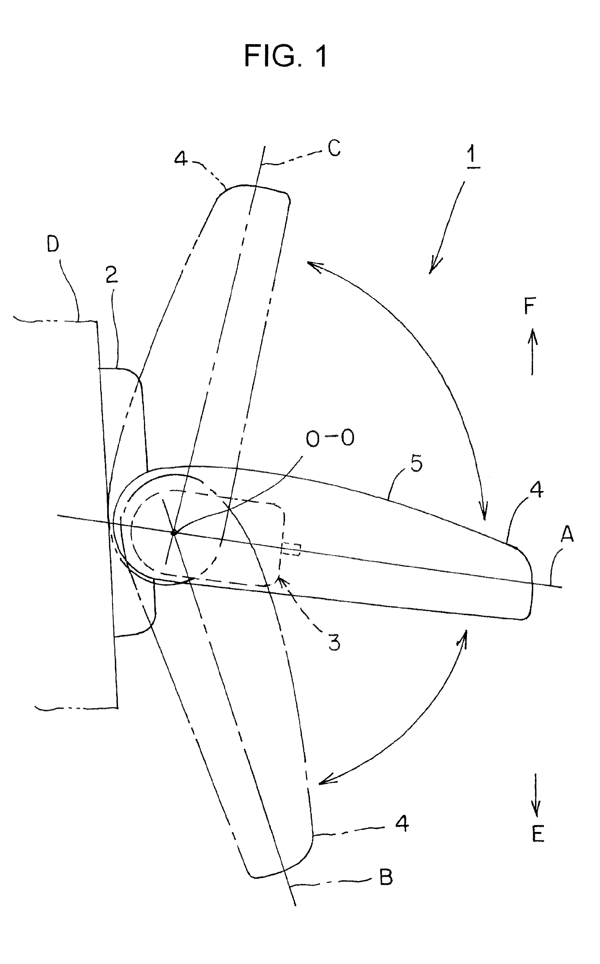

Hereinafter, a configuration of a vehicle outside mirror device in the embodiment will be described. In FIG. 1, reference numeral 1 designates a vehicle outside mirror device in the embodiment, and in this example, this reference numeral designates an electrically driven storage type door mirror device (an electrically driven storage type door mirror). The electrically driven storage type door mirror device 1 is equipped on each of the left and right doors (not shown) of an automobile. It is to be noted that the electrically driven storage type door mirror device 1 of the embodiment is equipped on the right side door of the automobile, and the electrically driven storage type door mirror device to be equipped on the left side door of the automobile is substantially reversed from the left and right of the electrically driven storage type door mirror device 1 of the embodiment.

In the electrically driven storage type door mirror device 1, as shown in FIG. 1, a mirror assembly 4 is the one that is rotatably mounted on a vehicle body (an automobile door) D via an electrically driven storage unit 3 and a base (a mirror base) 2. The base 2 is the one that is fixed to the door D.

The mirror assembly 4 is made of a mirror housing 5, a mount bracket (not shown), a power unit (not shown), and a mirror (a mirror unit), although not shown. The mount bracket is mounted in the mirror housing 5. The power unit is mounted on the mount bracket. On the power unit, the mirror is mounted to be able to tilt vertically or horizontally.

The electrically driven storage unit 3 comprises: a shaft holder 9; a shaft 10; a gear case 11 and a cover 12 serves as a casing; a motor 13; a deceleration mechanism 14 and a clutch mechanism 15 serves as a rotation force transmission mechanism, a bearing member 16; a stopper member 6; an electrically driven rotation range restricting mechanism; a buffering mechanism; a holding mechanism.

The shaft holder 9 is fixed to the base 2. It is noted that the shaft holder 9 may be integrally provided at the base 2. The shaft 10 is integrally provided at a center of one face (a top face) of the shaft holder 9. It is noted that the shaft 10 is integrally provided at a center of one face (a top face) of the shaft holder 9. The shaft 10 is formed in a hollow shape, and is configured so that a harness (not shown) is inserted through the shaft.

On the shaft 10, the gear case 11 and the cover 12 are rotatably mounted around a rotational center O-O of the shaft 10. The mount bracket of the mirror assembly 4 is mounted on the gear case 11. In the gear case 11 and the cover 12, there are respectively housed: the motor 13; the deceleration mechanism 14 and the clutch mechanism 15, a respective one of which serves as the rotation force transmission mechanism; the bearing member 16; the stopper member 6; the electrically driven rotation range restricting mechanism; the buffering mechanism; a holding mechanism.

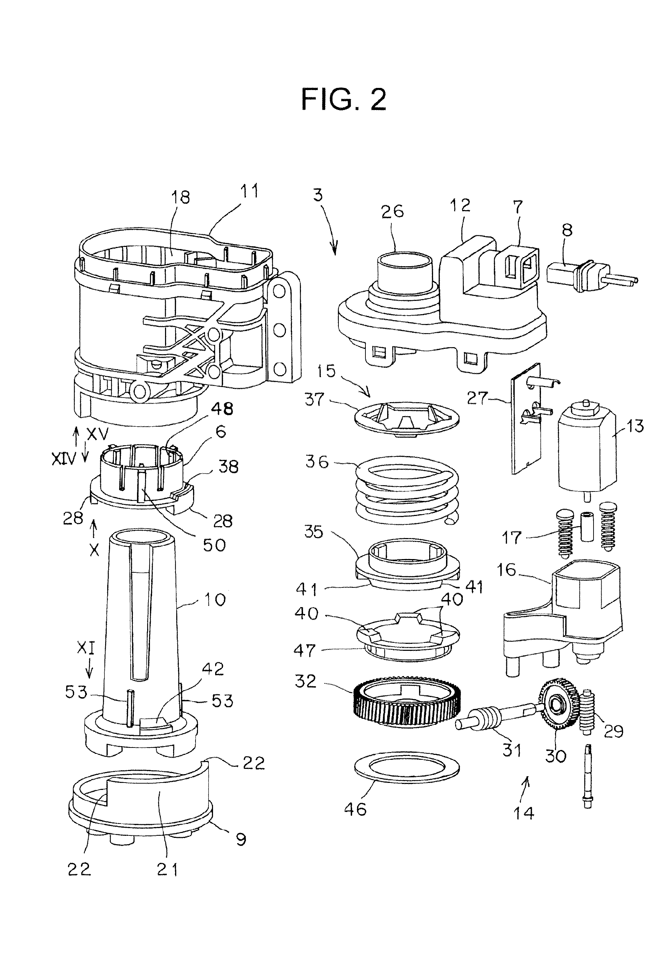

The gear case 11, as shown in FIG. 2, FIG. 3, FIG. 13, and FIG. 14, is formed in a sectional recessed shape of which one side (a lower side) is closed and the other side (an upper side) is opened. In other words, in the gear case 11, there is provided a housing portion 18 formed in a sectional recessed shape of which the side of shaft holder 9 is closed and the side of the cover 12 is opened. An insert hold 19 is provided at a closed portion of the gear case 11. The shaft 10 is inserted into the insert hole 19. As a result, the gear case 11 is rotatably mounted on the shaft 10 so as to be able to rotate around the rotational center O-O of the shaft 10.

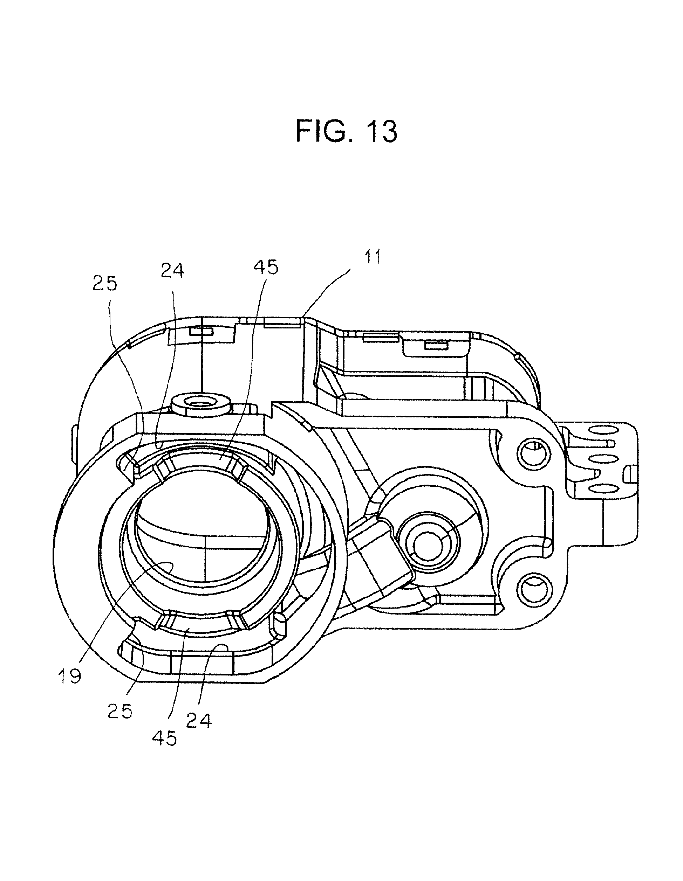

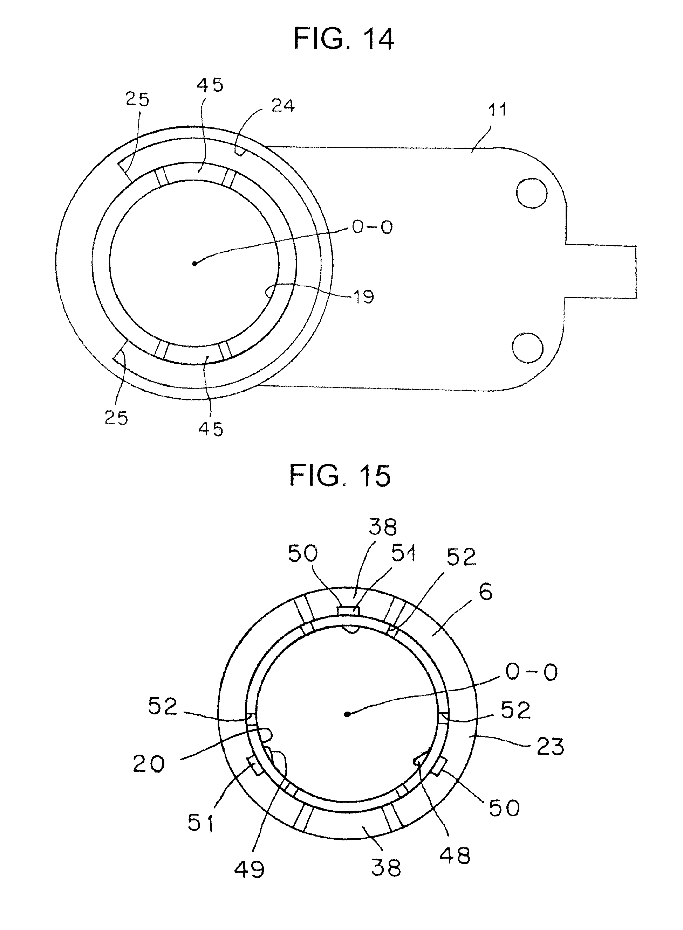

As shown in FIG. 2, FIG. 3, and FIG. 9, an arc-shaped archery protrusive portion 21 around a rotational center O-O of the shaft 10 is integrally provided on a top face of the shaft holder 9. An abutment face 22 is provided on a respective one of end faces of the archery protrusive portion 21. On the other hand, as shown in FIG. 13 and FIG. 14, an arc-shaped arc groove 24 around the rotational center O-O of the shaft 10 is provided on a bottom face of the gear case 11. An abutment face 25 is provided on a respective one of end faces of the arc groove 24.

The archery protrusive portion 21 of the shaft holder 9 engages with the arc groove 24 of the gear case 11. The archery protrusive portion 21 and the arc groove 24 configure a guide member that serves to guide appropriately in a case where the gear case 11 rotates around the rotational center O-O of the shaft 10 with respect to the shaft holder 9, in other words, as shown in FIG. 1, in a case where the mirror assembly 4 rotates between a use location A and a storage location B and the use location A and a forward tilt location C rearward (the clockwise direction as seen from the top) or forward (the counterclockwise direction as seen from the top) with respect to the case 2. In FIG. 1, reference uppercase letter E designates a rear side of a vehicle, and reference uppercase letter F designates a front side of the vehicle.

The abutment face 22 of the archery protrusive portion 21 and the abutment face 25 of the arc groove 24 configure a stopper mechanism that serves as a stopper for preventing the mirror assembly 4 from abutting against the door D by means of rotation of the mirror assembly 4 being restrained due to abutment between the abutment face 22 of the archery protrusive portion 21 and the abutment face 25 of the arc groove 24 before the mirror assembly 4 rotates in the clockwise direction as viewed from the top or in the counterclockwise direction as viewed from the top and then abuts against the door D.

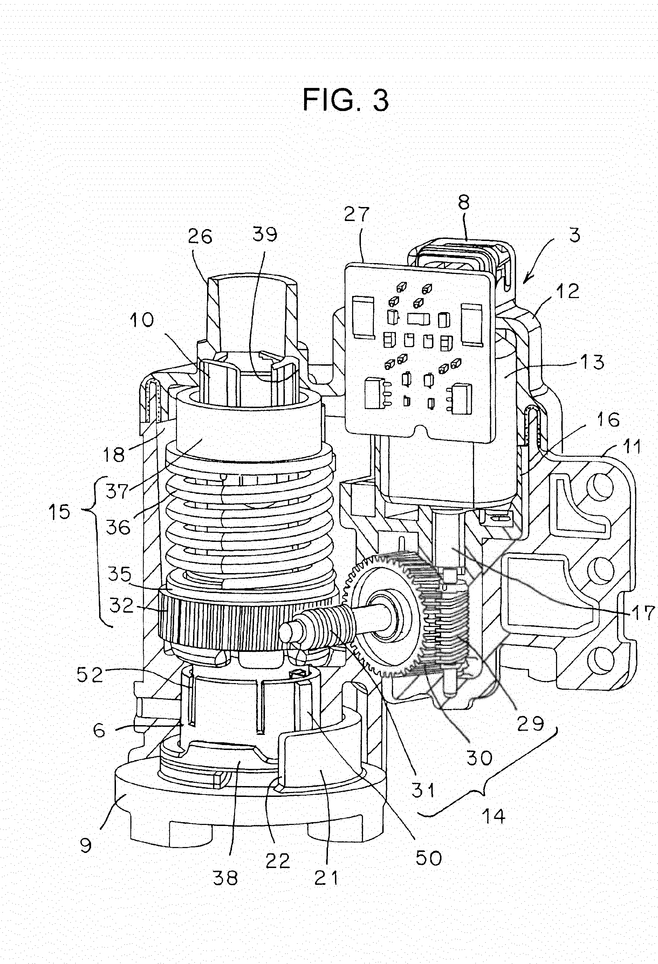

The cover 12, as shown in FIG. 2 and FIG. 3, is formed in a sectional inverted recessed shape of which one side (an upper side) is closed and the other side (a lower side) is opened. In other word, on the cover 12, there is provided a housing portion 18 formed in a sectional inverted recessed shape of which one side, i.e., the side of the gear case 11 is opened and the other side is opened. On the cover 12, a harness insert cylinder portion 26 which communicates with the shaft 10 that is formed in a hollow shape is integrally provided.

In addition, a socket portion 7 is provided at the cover 12. On the socket portion 7, a connector 8 which is electrically connected to a power supply (a battery) side, although not shown, electrically intermittently connects thereto and is mounted in a mechanically detachable manner. A board 27 is mounted on the socket portion 7. The board 27 is electrically connected to the motor 13. A switch circuit for controlling the drive or stoppage of the motor 13 is packaged on the board 27. As a result, the motor 13 is electrically connected to the connector 8 via the board 27 and the socket portion 7.

The cover 12 is engagingly fixed to the outside of an opening rim of the housing portion 18 of the gear case 11. In the housing portion 18 inside the gear case 11 and the cover 12, there are fixedly housed by means of screws or the like: the motor 13, the deceleration mechanism 14, the clutch mechanism 15, the bearing member 16, the stopper member 6, the washer 46, the ball 47, the electrically driven rotation range restricting mechanism, the buffering mechanism, the holding mechanism and the board 27.

In addition, on the cover 12, an insert hole 39 is provided so as to communicate with the harness insert cylinder portion 26. The shaft; 10 is inserted into the insert hole 39. As a result, the cover 12 is mounted on the shaft 10, together with the gear case 11, so as to be rotatable around the rotational center O-O of the shaft 10.

The deceleration mechanism 14 and the clutch mechanism 15, of the rotation force transmission mechanism, as shown in FIG. 2 and FIG. 3, that are housed in the housing portion 18 of the gear case 11 and the cover 12, that are provided between an output shaft (not shown) and the shaft 10, of the motor 13, and that transmit a rotation force of the motor 13 to the shaft 10. The motor 13, the deceleration mechanism 14, and the clutch mechanism 15, a respective one of which serves as the rotation force transmission mechanism, are the ones that electrically drive the shaft 10 to rotate the mirror assembly 4 around the rotational center O-O of the shaft 10.

The deceleration mechanism 14 is comprised of: a first worm gear 29 which serves as a first step gear; a helical gear 30 which serves as a second step gear engaging with the first worm gear 29; a second worm gear 31 which serves as a third step gear; and a clutch gear 32 which serves as a final step gear with which the second worm gear 31 engages.

The first worm gear 29 is rotatably borne on the gear case 11 and the bearing member 16. The first worm gear 29 is linked with an output shaft of the motor 13 via a joint 17. The helical gear 30 is rotatably borne on the bearing member 16. The second worm gear 31 is rotatably borne on the gear case 11 and the bearing member 16. The helical gear 30 and the second worm gear 31 are linked with each other in an integrally rotatable manner.

The clutch mechanism 15 comprises the clutch gear 32, a clutch 47, a clutch holder 35, a spring 36, and a push nut 37. The clutch gear 32 and the clutch 47 that are distinct from each other, and are integrally combined with each other are fixed to each other around the rotational center O-O of the shaft 10. The clutch gear 32 and the clutch 47 may be integrally configured with each other. The clutch mechanism 15 is configured by sequentially engaging the clutch gear 32, the clutch 33, the clutch holder 35, and the spring 36 with the shaft 10, locking the push nut 37 with the shaft 10, and then, establishing the spring 36 in a compressed state. The clutch 47 and the clutch holder 35 are linked with each other in an intermittently connectable manner. The second worm gear 31 of the deceleration member 14, the deceleration member 14 and the clutch gear 32 of the clutch mechanism 15 engage with each other, whereby a rotation force of the motor 13 is transmitted to the shaft 10.

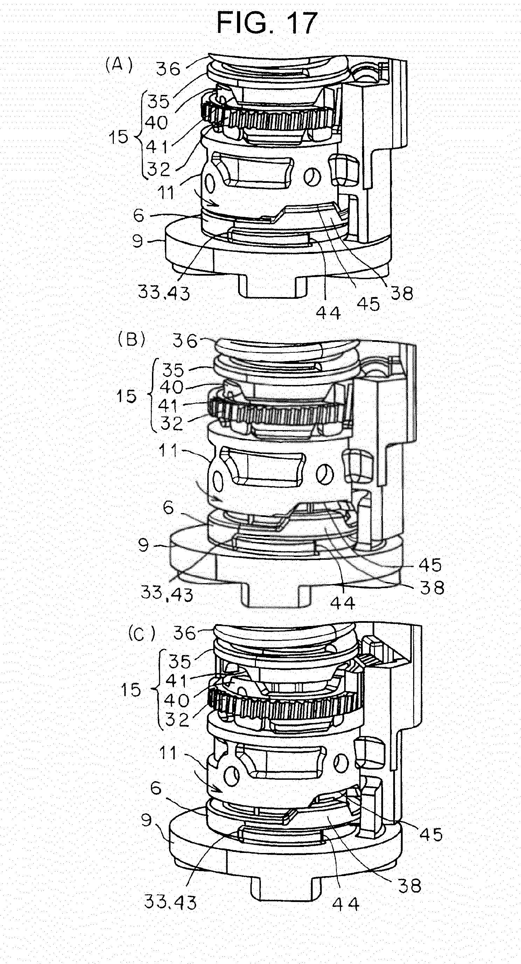

The clutch 47 and the clutch holder 35 configure the clutch mechanism 15. The clutch 47 is mounted on the shaft 10 so as to be rotatable around the rotational center O-O of the shaft 10 and to be movable in an axial direction. The clutch holder 35 is mounted on the shaft 10 in such an engaged state as to disable rotation and as to be movable in an axial direction. As shown in FIG. 2, FIG. 17, FIG. 19 and FIG. 20, a plurality of, i.e., three mountain-shaped clutch protrusive portions 40 and three valley-shaped clutch recessed portions 41 are provided at equal intervals on a face which is mutually opposite to the clutch 47 and the clutch holder 35, i.e., on one face (an upper face) side of the clutch 47 and one face (a bottom face) side of the clutch holder 35. In addition, in FIG. 17, FIG. 19 and FIG. 20, the clutch 47 has not been shown, so that the inside of the clutch gear 32 is incorporated. Therefore in FIG. 17, FIG. 19 and FIG. 20, the clutch 47 can be regarded as an integral structure with the clutch gear 32. In other words, the clutch 47 is synonymous with the clutch gear 32.

When the clutch protrusive portion 40 and the clutch recessed portion 41 are established in an engaged state, the clutch 47, and the clutch holder 35 are in a continuous state (a non-disengaged state or a connected state); or when the clutch protrusive portion 40 and the clutch recessed portion 41 are in a disengaged state, the clutch 47, and the clutch holder 35 are in a discontinuous state (an disengaged state or a disconnected state). The clutch mechanism 15 is not disengaged from an electrically driven rotation force of the motor 13 and the rotation force transmission mechanism (the deceleration mechanism 14 and the clutch mechanism 15), and is disengaged therefrom with the use of a force which is greater than the electrically driven rotation force so as to be able to rotate the mirror assembly 4 relative to the shaft 10.

Among the clutch members, the other face (a bottom face) side of the clutch gear 32 and the clutch 33, directly abut or abut via a washer 46 against one face (a top face) of a bottom part of the gear case 11. On the other hand, among the clutch members, the other face (a top face) side of the clutch holder 35 directly abuts against the spring 36.

The stopper member 6 is provided between the shaft holder 9 and the gear case 11. The stopper member 6 is made of an inexpensive resin member with its low friction property and wear and abrasion resistance, for example, POM (polyacetal or acetal resin) or PPS (polyphenylene sulfide). The stopper member 6 is formed in a hollow-like cylindrical shape. That is, the stopper member 6 is configured by a cylinder portion 20 has an insert hole into which the shaft 10 is to be inserted. A jaw portion 23 is integrally provided on one end (an under end) the cylinder portion 20. The stopper member 6 is rotatably mounted on the shaft around the rotational center O-O of the shaft 10.

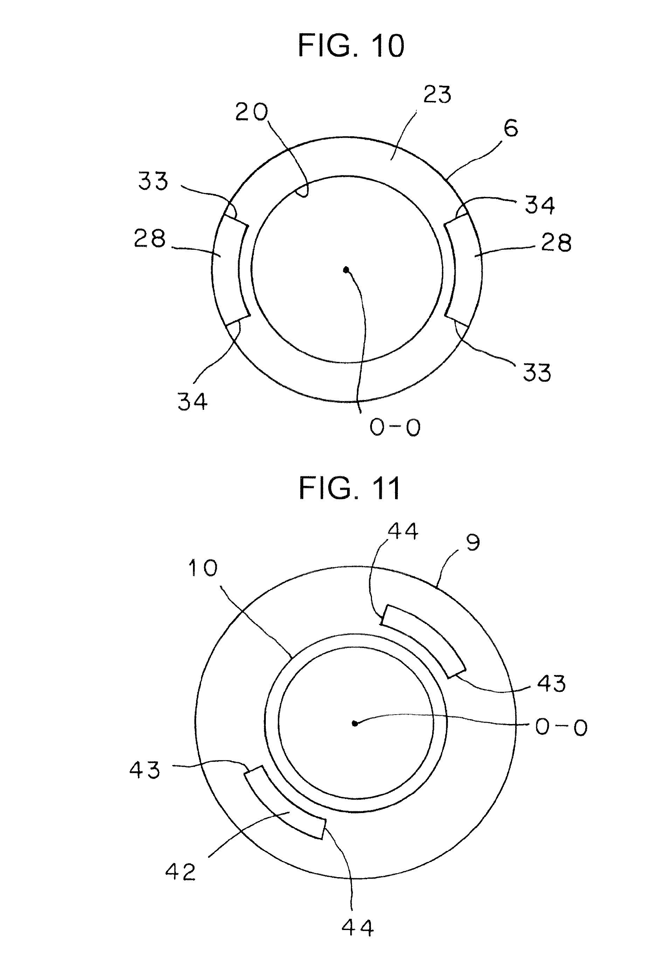

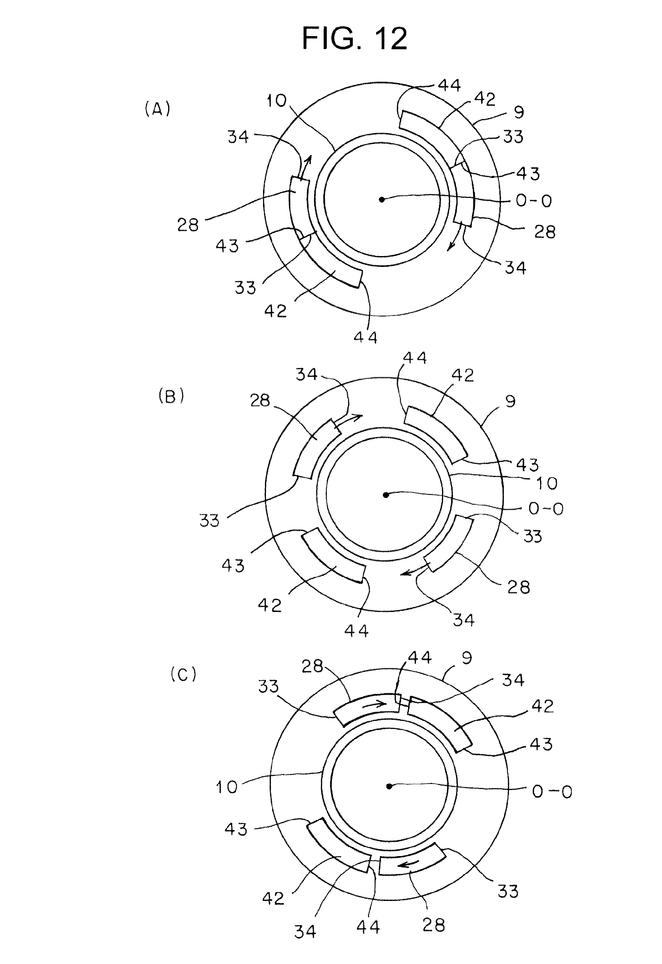

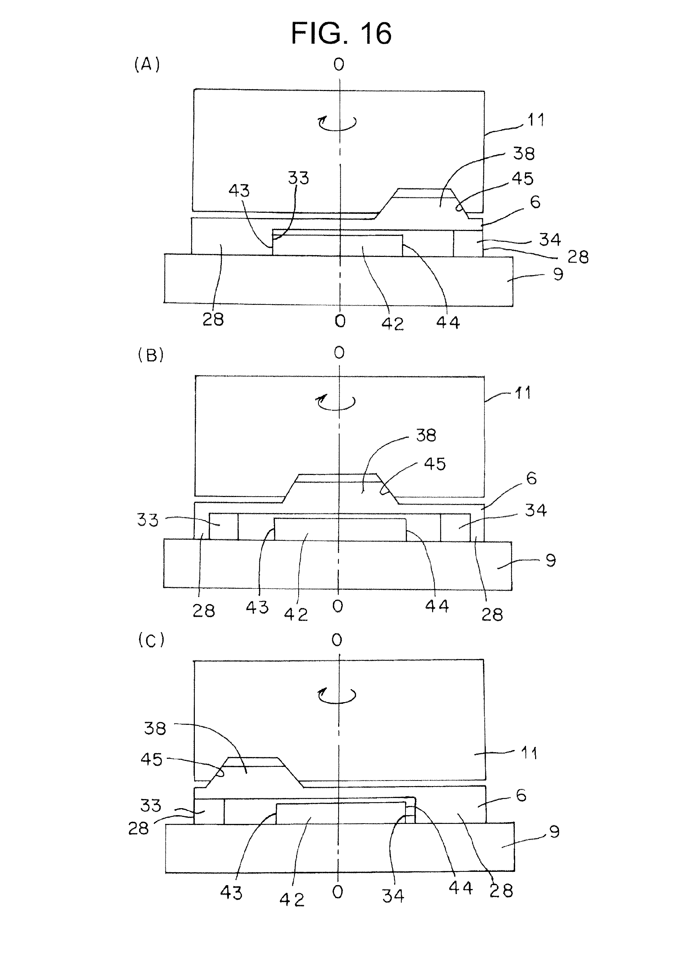

As shown in FIG. 10, FIG. 12, and FIG. 16, on one face (a bottom face) of the jaw portion 23 of the stopper member 6, two stopper protrusive portions 28 around the rotational center O-O of the shaft 10 are integrally provided at equal intervals. On both end faces of the stopper protrusive portion 28, stopper faces 33 and 34 of the electrically rotation range restricting mechanism are respectively provided. As shown in FIG. 15 and FIG. 16, on the other face (a top face) of the jaw portion 23 of the stopper member 6, a plurality of, in this example, two trapezoidal gear protrusive portions 38, each of which serves as a gear portion of the buffering mechanism, are integrally provided at equal intervals on a circumference around the rotational center O-O of the shaft 10.

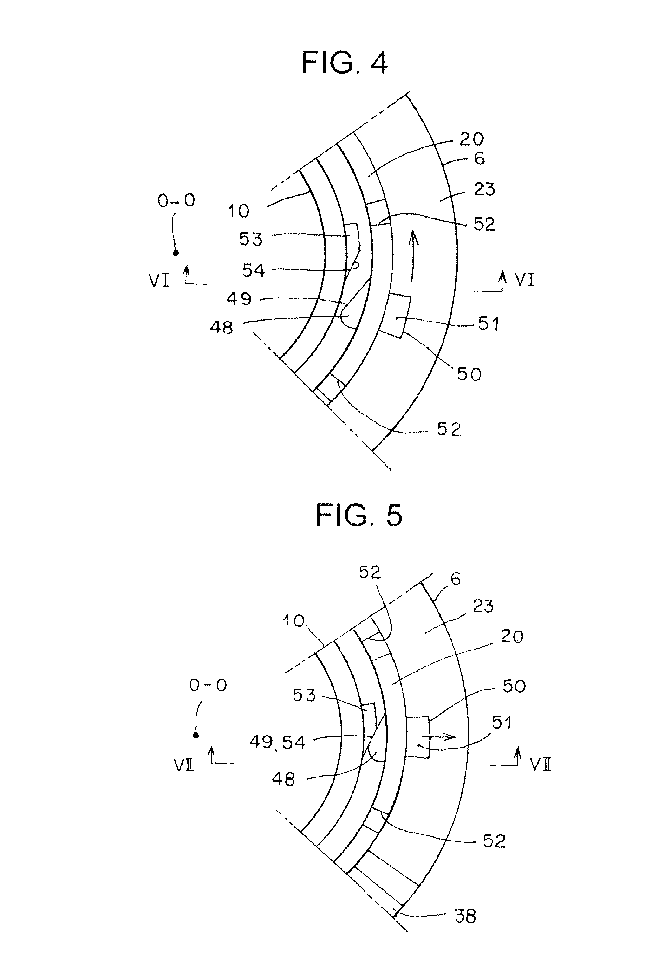

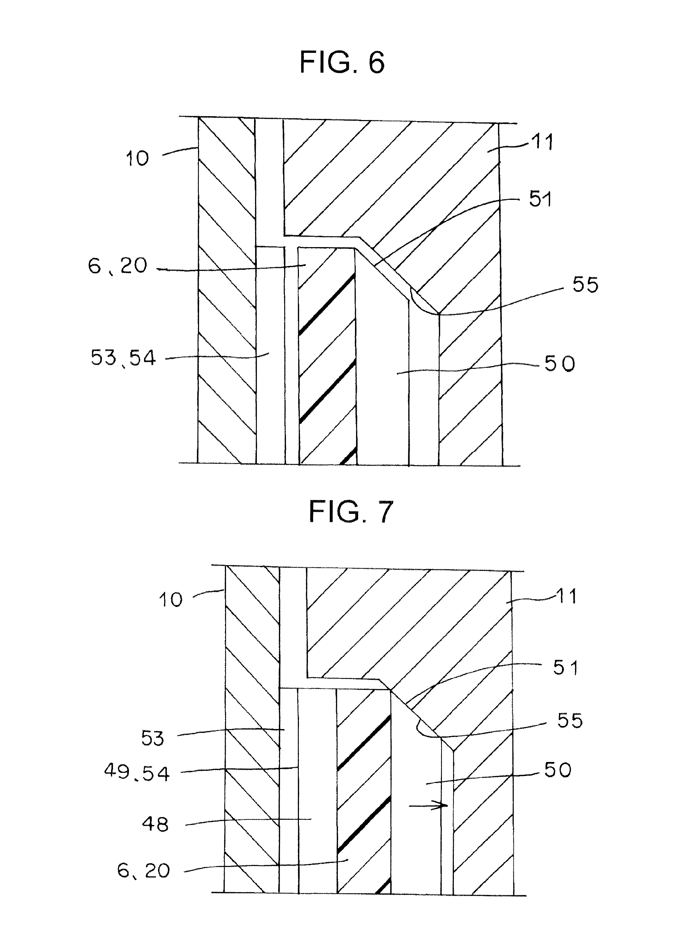

As shown in FIG. 4 to FIG. 8 and FIG. 15, on an interior face and an exterior face of the other end part (a top end part) of the cylinder portion 20 of the stopper member 6, an inside protrusion 48 and an outside protrusion 50, each of which serves as a holding member, are integrally provided at equal intervals, respectively. The inside protrusion 48 and the outside protrusion 50 are respectively provided in a plurality, in this example, on a three by three pieces basis. The inside protrusion 48 and the outside protrusion 50 are formed in a rib shape that extends in the direction of the rotational center O-O of the shaft 10. On the interior face of the inside protrusion 48, a tapered side face 49 is formed to tilt upward in the clockwise direction. On the other hand, on one end face (an upper end face) of the outside protrusion 50, a tapered face 51 is formed to tilt downward from the inside to the outside. On the other end part (an upper end part) of the cylinder portion 20 of the stopper member 6, in other words, on both sides of the inside protrusion 48 and the outside protrusion 50, slits 52 are respectively provided in the direction of the rotational center O-O of the shaft 10. By means of the slits 52, the other end part (an upper end part) of the cylinder portion 20 of the stopper member 6, in other words, portions at which the inside protrusion 48 and the outside protrusion 50 are positioned, are easily deformed outside (in a radial direction from the rotational center O-O of the shaft 10) in the direction indicated by the arrow drawn by the solid line in FIG. 5 and FIG. 7.

The shaft holder 9 and the shaft 10 are comprised of a member with its high rigidity, for example, a die cast or a resin. As shown in FIG. 11, FIG. 12 and FIG. 16, on a top face of the shaft 10, two stopper protrusive portions 42 around the rotational center O-O of the shaft 10 are integrally provided at equal intervals in correspondence with the stopper protrusive portion 28 of the stopper member 6. On both end face of the stopper protrusive portion 42, an stopper face 43, 44 of the electrically driven rotation range restricting mechanism are provided in correspondence with the stopper face 33, 34 of the stopper member 6.

As shown in FIG. 4 to FIG. 8, on an exterior face of the shaft 10, protrusions 53, each of which serves as a holding mechanism, are integrally provided at equal intervals in association with the inside protrusions 48 of the stopper member 6. This protrusion 53 is provided in a plurality, in this example, in three pieces. The protrusion 53 is formed in a rib shape that extends in the direction of the rotational center O-O of the shaft 10. On an exterior face of the protrusion 53, a tapered side face 54 tilting downward in the clockwise direction is formed in association with the tapered side face 49 of the inside protrusion 48 of the stopper member 6.

The gear case 11 is comprised of a member with its high rigidity, for example, a resin containing nylon or a glass fiber or a carbon fiber. As shown in FIG. 13, FIG. 14 and FIG.16, on the other face (a bottom face) of a bottom part of the gear case 11, a plurality of, and in this example two trapezoidal engagement recessed portions 45 that serve as engagement portions of the buffering mechanism are integrally provided at equal intervals in correspondence with the gear protrusive portions 38 of the stopper member 6 on a circumference around the rotational center O-O of the shaft 10.

As shown in FIG. 6 to FIG. 8, on an interior face of the gear case 11, a tapered bottom face 55 that serves as a holding mechanism is formed in association with the tapered top face 51 of the outside protrusion 50 of the stopper member 6, the tapered bottom face 55 tilting downward from the inside to the outside. The tapered bottom face 55 may be provided in a plurality, in this example, in three pieces, in association with the tapered top face 51 of the outside protrusion 50 of the stopper member 6, or alternatively, may be provided on a circumference around the rotational center O-O of the shaft 10 in association with the tapered top face 51 of the outside protrusion 50 of the stopper member 6.

The electrically driven rotation range restricting mechanism is a mechanism adapted to restrain a range of the electrically driven rotation of a mirror assembly. The electrically driven rotation range restricting mechanism is made of the stopper faces 33, 34, 43, and 44 that are provided in the stopper member 6 and the shaft holder 9. The electrically driven rotation range restricting mechanism is a mechanism in which the stopper face 33 or 34 of the stopper member 6 and the stopper face 43 or 44 of the shaft holder 9 abut against each other, whereby the stopper member 6 is established in a state in which it is fixed to the shaft holder 9 and then the use location A of the mirror assembly 4 is restrained.

The electrically driven rotation range, as shown in FIG. 1, is a range between a use location A and a storage location B. As a result, if one stopper face 33 of the stopper member 6 and one stopper face 43 of the shaft holder 9 abut against each other, the mirror assembly 4 is positioned in the use location A.

The buffering mechanism is a mechanism adapted to rotate the mirror assembly 4 outside of an electrically driven actuation range for the sake of buffering together with the clutch mechanism 15, in other words, a mechanism for releasing the mirror assembly forward. The buffering mechanism is made of an engagement protrusion portion 38 and an engagement recessed portion 45 that are provided in the stopper member 6 and the gear case 11, respectively. In the buffering mechanism, the engagement protrusive portion 38 of the stopper member 6 and the engagement recessed portion 45 of the gear case 11 are disallowed to disengage from each other by means of the electrically driven rotation force, and the stopper member 6 and the gear case 11 rotate together around the rotational center O-O of the shaft 10 with respect to the shaft 10 and the shaft holder 9 in the electrically driven rotation range (the range between the use location A and the storage location B).

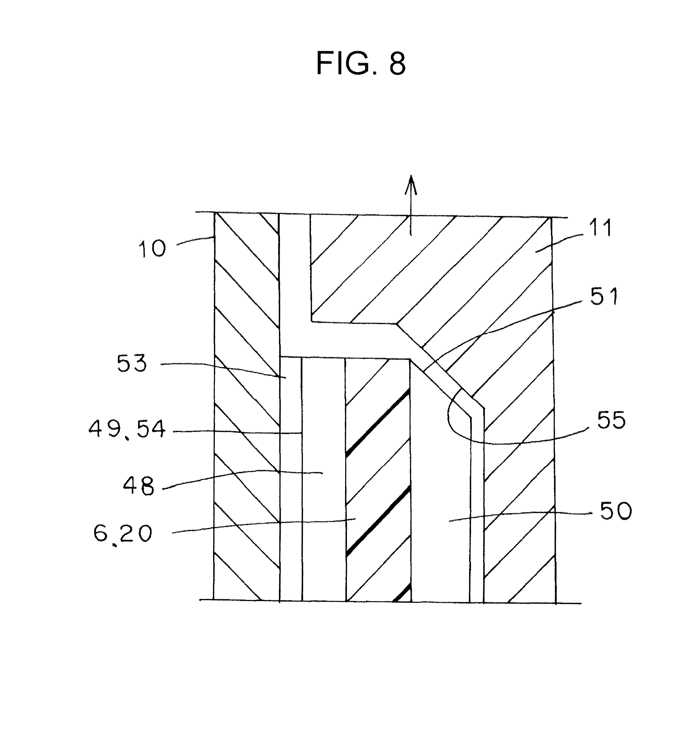

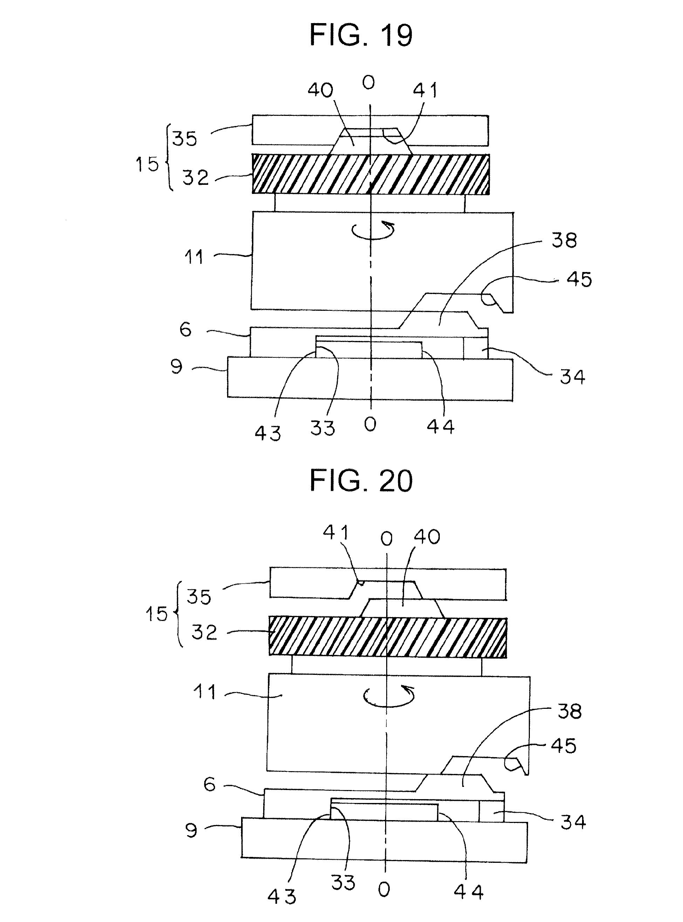

In the buffering mechanism, when a force that is greater than the electrically driven rotation force is applied in a forward F direction, the engagement protrusive portion 38 of the stopper member 6 and the engagement recessed portion 45 of the gear case 11 disengage from each other, and further, the clutch mechanism 15 disengages (a clutch protrusive portion 40 of the clutch 47 and a clutch recessed portion 41 of the clutch holder 35 disengage from each other) and then the gear case 11 rotates in the counterclockwise direction as seen from the top, around the rotational center O-O of the shaft 10 with respect to the shaft 10 and the shaft holder 9. If the engagement protrusive portion 38 of the stopper member 6 and the engagement recessed portion 45 of the gear case 11 disengage from each other, the gear case 11 moves in one direction (an upward direction) with respect to the shaft 10, as shown in FIG. 8 and FIG. 19.

The holding mechanism is a mechanism adapted to reliably hold the mirror assembly 4 in such a manner as to be free of vibration in the use location A. The holding mechanism is made of the stopper member 6 that is provided between the shaft 10 and the gear case 11. In other words, the holding mechanism is made of: the tapered side face 49 of the inside protrusion 48 of the stopper member 6 and the tapered top face 51 of the outside protrusion 50; the tapered side face 54 of the protrusion 53 of the shaft 10; and the tapered bottom face 55 of the gear case 11.

The holding mechanism is established in a noncontact state with respect to the shaft 10 and the gear case in a range in which the mirror assembly 4 rotates between the use location A and the storage location B. In other words, as shown in FIG. 4, FIG. 6, and FIG. 8, the tapered side face 49 of the inside protrusion 48 of the stopper member 6 and the tapered side face 54 of the protrusion 53 of the shaft 10 are respectively established in a noncontact state. In addition, the tapered top face 51 of the outside protrusion 50 of the stopper member 6 and the tapered bottom face 55 of the gear vase 11 are respectively established in a noncontact state.

When the mirror assembly 4 is positioned in the use location A, the holding mechanism is established in a contact state with respect to the shaft 10 and the gear case 11, and holds the mirror assembly 4 in the use location A. In other words, as shown in FIG. 5 and FIG. 7, the tapered side face 49 of the inside protrusion 48 of the stopper member 6 and the tapered side face 54 of the protrusion 53 of the shaft 10 are respectively established in a contact state. Thus, in the cylinder portion 20 of the stopper member 6, a portion at which the inside protrusion 48 is positioned is deformed outside (in the radial direction from the rotational center O-O of the shaft 10), in the direction indicated by the arrow drawn by the solid line in FIG. 5 and FIG. 7. In this manner, as shown in FIG. 7, the tapered top face 51 of the outside protrusion 50 of the stopper member 6 and the tapered bottom face 55 of the gear case 11 are respectively established in a contact state.

### (Description of Functions)

The electrically driven storage type door mirror device 1 in the embodiment is made of the constituent elements as described above, and hereinafter, its related functions will be described.

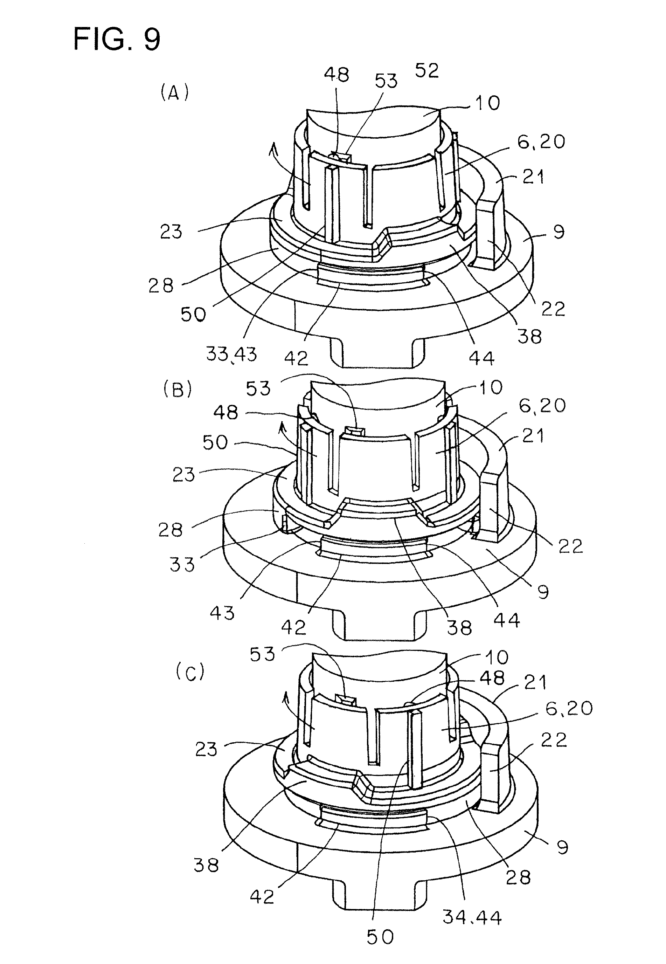

First, a description will be given with respect to a case in which the mirror assembly 4 that is positioned in the use location A is electrically driven to be rotated and stored in the storage location B, as shown in FIG. 1. When the mirror assembly 4 is established in a state in which it is positioned in the use location A (in a set state or in a use state), the clutch mechanism 15 is established in a state shown in FIG. 17 (A). The electrically driven rotation range restricting mechanism is established in a state shown in FIG. 9 (A), FIG. 12 (A), FIG. 16 (A), or FIG. 17 (A). The buffering mechanism is established in a state shown in FIG. 16 (A) or FIG. 17 (A). The holding mechanism is established in a state shown in FIG. 5 or FIG. 7.

In other words, in the clutch mechanism 15, as shown in FIG. 17 (A), the clutch protrusive portion 40 of the clutch 47 and the clutch recessed portion 41 of the clutch holder 35 engage with each other; and therefore, the clutch gear 32 and the clutch holder 35 are established in a state in which they are engaged with each other. Thus, the clutch gear 32 and the clutch 47 are respectively established in a rotation disable state with respect to the shaft 10, together with the clutch holder 35.

In the electrically driven rotation range restricting mechanism, as shown in FIG. 9 (A), FIG. 12 (A), FIG. 16 (A), and FIG. 17 (A), one stopper face 33 of the stopper member 6 and one stopper face 43 of the shaft holder 9 abut against each other. As a result, the stopper member 6 is established in a state in which it is fixed to the shaft holder 9.

The buffering mechanism, as shown in FIG. 16 (A) and FIG. 17 (A), a gear protrusive portion 38 of the stopper member 6 and a gear recessed portion 45 of the gear case 11 are established in a state in which these portions are geared with each other. As a result, the stopper member 6 and the gear case 11 are established in a state in which they are integrated with each other

In the holding mechanism, as shown in FIG. 5 and FIG. 7, the tapered side face 49 of an inside protrusion 48 of the stopper member 6 and the tapered side face 54 of the protrusion 53 of the shaft 10 are respectively established in a contact state. In addition, the tapered top face 51 of the outside protrusion 50 of the stopper member 6 and the tapered bottom face 55 of the gear case 11 are respectively established in a contact state. As a result, the mirror assembly 4 is reliably positioned in the use location A without any vibration.

In this set state (a use state) of FIG. 15 (A), a switch (not shown) in an automobile room is operated and then power is fed to a motor 13 via a connector 8, a socket portion 7, and a board 27 so as to thereby drive the motor 13. Then, a rotation force of the motor 13 is transmitted to the clutch gear 32 that is fixed to the shaft 10 via an output shaft and a deceleration mechanism 14. At this time, the clutch gear 32 and the clutch 33 are established in a state in which a rotation is disabled relative to the shaft 10, together with the clutch holder 35; and therefore, a second worm gear 31 of the deceleration mechanism 14 is about to rotate around a rotational center O-O of the shaft 10 with the clutch gear 32 serving as a fixing gear. Its relevant rotation force is transmitted to the gear case 11 of the electrically driven storage unit 3. As a result, by this rotation, the mirror assembly 4 having the electrically driven storage unit 3 incorporated therein, as shown in FIG. 1, is about to rotate in the counterclockwise direction seen from a top side, from a use location A to a storage location B around the rotational center O-O of the shaft 10.

When the mirror assembly 4 rotates in the clockwise direction as viewed from the top from the use location A to the storage location B, the gear case 11 of the electrically driven storage unit 3 rotates in the clockwise direction as seen from the top, similarly, with respect to the shaft 10 (in the direction indicated by the arrow drawn by the solid line in FIG. 16). Concurrently, the stopper member 6 of which the engagement protrusive portion 38 engages with the engagement recessed portion 45 of the gear case 11 rotates in the clockwise direction as seen from the top, similarly, with respect to the shaft holder 9 (in an opposite direction to the direction indicated by the arrow drawn by the solid line in FIG. 4 and in the direction indicated by the arrow drawn by the solid line in FIG. 9, FIG. 12, or FIG. 16). In other words, one face (a bottom face) of the protrusive portion 28 of the stopper member 6 rotates (slips, slides, or slidably moves) on a top face of the shaft holder 9. As a result, as shown in FIG. 9 (B), FIG. 12 (B), and FIG. 16 (B), one stopper face 33 of the stopper member 6 deviates from one stopper face 43 of the shaft holder 9.

When the mirror assembly 4 is positioned in the storage location B, an abutment face 25 of an arc groove 24 of the gear case 11 abuts against an abutment face 22 of an archery protrusive portion 21 of the shaft holder 9 and then rotation of the gear case 11 also stops similarly.

At the same time, a value of a current (an actuation current) supplied to a motor 13 rises and reaches a predetermined value, a switch circuit of a board 27 is actuated, and then, power supply to the motor 13 is interrupted. As a result, the mirror assembly 4 moves from the use location A to the storage location B shown in FIG. 1 and then stops and is positioned therein.

When this mirror assembly 4 rotates from the use location A to the storage location B in the clockwise direction as seen from the top, the holding mechanism is established in a noncontact state with respect to the shaft 10 and the gear case 11. In other words, as shown in FIG. 4, FIG. 6, and FIG. 8, the tapered side face 49 of the inside protrusion 48 of the stopper member 6 and the tapered side face 54 of the protrusion 53 of the shaft 10 are respectively established in a noncontact state. In addition, the tapered top face 51 of the outside protrusion 50 of the stopper member 6 and the tapered bottom face 55 of the gear case 11 are respectively established in a noncontact state. As a result, the mirror assembly 4 rotates smoothly from the use location A to the storage location B in the clockwise as seen from the top without applying a load to the electrically driven storage unit 3.

Next, a description will be given with respect to a case in which the mirror assembly 4 that is positioned in the storage location B is electrically driven to be rotated and restored to the use location A, as shown in FIG. 1. When the mirror assembly 4 is established in a state in which it is positioned in the storage location B (in a storage state), the clutch mechanism 15 is established in a state shown in FIG. 17 (A). The electrically driven rotation range restricting mechanism is established in a state shown in FIG. 9 (C), FIG. 12 (C), or FIG. 16 (C). The buffering mechanism is established in a state shown in FIG. 16 (C). The holding mechanism is established in a state shown in FIG. 4 or FIG. 6.

In other words, the clutch mechanism 15 is established in an engaged state as is the case with a set state; and therefore, the clutch gear 32 is established in a rotation disable state with respect to the shaft 10 together with the clutch 47 and the clutch holder 35. The abutment face 25 of the arc groove 24 of the gear case 11 and the abutment face 22 of the archery protrusive portion 21 of the shaft holder 9 abut against each other, and the engagement protrusive portion 38 of the stopper member 6 and the engagement recessed portion 45 of the gear case 11 engage with each other; and therefore, the stopper member 6 is established in a state in which it is fixed to the shaft holder 9. The buffering mechanism is established in a state in which the engagement protrusive portion 38 of the stopper member 6 and the engagement recessed portion 45 of the gear case 11 engage with each other; and therefore, the stopper member 6 and the gear case 11 are established in a state in which they are integrated with each other. The holding mechanism is established in a noncontact state with respect to the shaft 10 and the gear case 11.

In this storage state, a switch (not shown) in the room of an automobile is operated, and the motor 13 is driven. Then a rotation force of the motor 13 is transmitted to the clutch gear 32 that is established in a rotation disable state, via a deceleration mechanism 14. In this manner, the mirror assembly 4 incorporating the electrically driven storage unit 3, as shown in FIG. 1, rotates from the storage location B to the use location A in the counterclockwise direction as seen from the top around the rotational center O-O of the shaft 10.

When this mirror assembly 4 rotates from the storage location B to the use location A in the counterclockwise direction as seen from the top, the gear case 11 of the electrically driven storage unit 3 rotates in the counterclockwise direction as seen from the top similarly with respect to the shaft 10 (in an opposite direction to the direction indicated by the arrow drawn by the solid line in FIG. 16). Concurrently, the stopper member 6 of which the engagement protrusive portion 38 engages with the engagement recessed portion 45 of the gear case 11 rotates in the counterclockwise direction as seen from the top, similarly, with respect to the shaft holder 9 (in the direction as indicated by the arrow drawn by the solid line in FIG. 4 and in an opposite direction to the direction as indicated by the arrow drawn by the solid line in FIG. 9, FIG. 12, or FIG. 16). In other words, a lower face of the protrusive portion 28 of the stopper member 6 rotates (slips, slides, or slidably moves) on a top face of the shaft holder 9. As a result, as shown in FIG. 9 (B), FIG. 12 (B), and FIG. 16 (B), the abutment face 25 of the arc groove 24 of the gear case 11 deviates from the abutment face 22 of the archery protrusive portion 21 of the shaft holder 9.

When the mirror assembly 4 is positioned in the use location A, as shown in FIG. 9 (A), FIG. 12 (A), and FIG. 16 (A), one stopper face 33 of the stopper member 6 abuts against one stopper face 43 of the shaft holder 9. As a result, the stopper member 6 is fixed to the shaft holder 9, and rotation of the stopper member 6 stops. In addition, rotation of the gear case 11 of which the engagement recessed portion 45 engages with the engagement protrusive portion 38 of the stopper member 6 also stops similarly.

At the same time, a value of a current (an actuation current) to be supplied to the motor 13 increases and then reaches a predetermined value, so that a switch circuit of a board 27 is actuated and then current supplied to the motor 13 is interrupted. As a result, the mirror assembly 4 stops and is positioned in the use location A as a predetermined location shown in FIG. 1.

When this mirror assembly 4 is positioned in the use location A, the holding mechanism is established in a contact state with respect to the shaft 10 and the gear case 11. In other words, as shown in FIG. 5 and FIG. 7, the tapered side face 49 of the inside protrusion 48 of the stopper member 6 comes into contact with the tapered side face 54 of the protrusion 53 of the shaft 10. Then, in the cylinder portion 20 of the stopper member 6, a position at which the inside protrusion 48 is positioned is deformed outside (in a radial direction from the rotational center O-O of the shaft 10) in the direction as indicated by the arrow drawn by the solid line in FIG. 5 or FIG. 7. In this manner, as shown in FIG. 7, the tapered top face 51 of the outside protrusion 50 of the stopper member 6 comes into contact with the tapered bottom face 55 of the gear case 11. In this manner, the tapered side face 49 of the inside protrusion 48 of the stopper member 6 and the tapered side face 54 of the protrusion 53 of the shaft 10 are respectively established in a contact state. In addition, the tapered top face 51 of the outside protrusion 50 of the stopper member 6 and the tapered bottom face 55 of the gear case 11 are respectively established in a contact state. As a result, the mirror assembly 4 is reliably positioned in the use location A without any vibration.

Further, a description will be given with respect to a case in which the mirror assembly 4 that is positioned in the use location A is tilted in a forward tilt location C for the sake of buffering, as shown in FIG. 1. When the mirror assembly 4 is established in a state in which it is positioned in the use location A (in a set state or in a use state), the clutch mechanism 15 is established in a state shown in FIG. 17 (A). The electrically driven rotation range restricting mechanism is established in a state shown in FIG. 9 (A), FIG. 12 (A), FIG. 16 (A), or FIG. 17 (A). The buffering mechanism is established in a state shown in FIG. 16 (A) or FIG. 17 (A). The holding mechanism is established in a state shown in FIG. 5 or FIG. 7.

In other words, the clutch mechanism 15 is established in an engaged state; and therefore, the clutch gear 32 is established in a rotation disable state with respect to the shaft 10 together with the clutch 47 and the clutch holder 35. The electrically driven rotation range restricting mechanism is established in a state in which one stopper face 33 of the stopper member 6 and one stopper face 43 of the shaft holder 9 abut against each other; and therefore, the stopper member 6 is established in a state in which it is fixed to the shaft holder 9. The buffering mechanism is established in a state in which the engagement protrusive portion 38 of the stopper member 6 and the engagement recessed portion 45 of the gear case 11 engage with each other; and therefore, the stopper member 6 and the gear case 11 are established in a state in which they are integrated with each other. The holding mechanism is established in a contact state with respect to the shaft 10 and the gear case 11; and therefore, the mirror assembly 4 is reliably positioned in the use location A without any vibration.

In this set state (use state), a force in the counterclockwise direction as seen from the top, which is greater than an electrically driven rotation force exerted by the motor 13 and the deceleration mechanism 14, (a manual force or a force generated when something hits the mirror assembly 4), is applied to the mirror assembly 4 that is positioned in the use location A. Then, the gear case 11 that is mounted to the mirror assembly 4 is about to rotate in the counterclockwise direction as seen from the top (in the direction indicated by the arrow drawn by the solid line in FIG. 17, FIG. 19 or FIG. 20). At this time, as shown in FIG. 17, FIG. 19, and FIG. 20, one stopper face 33 of the stopper member 6 abuts against one stopper face 43 of the shaft holder 9; and therefore, the stopper member 6 is fixed to the shaft holder 9, disabling rotation in the counterclockwise direction as seen from the top.

Therefore, as shown in FIG. 17 (B) and FIG. 19, the engagement recessed portion 45 of the gear case 11 runs on the engagement protrusive portion 38 of the stopper member 6 and then the engagement protrusive portion 38 of the stopper member 6 and the engagement recessed portion 45 of the gear case 11 first disengage from each other. At this time, the gear case 11 (including the cover 12, the motor 13, the deceleration mechanism 14, the bearing member 16, the clutch gear 32, and the clutch holder 35) moves (rises) against a spring force of a spring 36 in the direction indicated by the arrow drawn by the solid line in FIG. 8.

At this time, as shown in FIG. 8, the tapered side face 49 of the inside protrusion 48 of the stopper member 6 and the tapered side face 54 of the protrusion 53 of the shaft 10 are respectively established in a contact state; and therefore, the stopper member 6 is established in a state in which it is fixed to the shaft 10. On the other hand, the tapered top face 51 of the outside protrusion 50 of the stopper member 6 and the tapered bottom face 55 of the gear case 11 are respectively established in a noncontact state; and therefore, the gear case 11 is established in a rotatable state with respect to the stopper member 6 and the shaft 10.

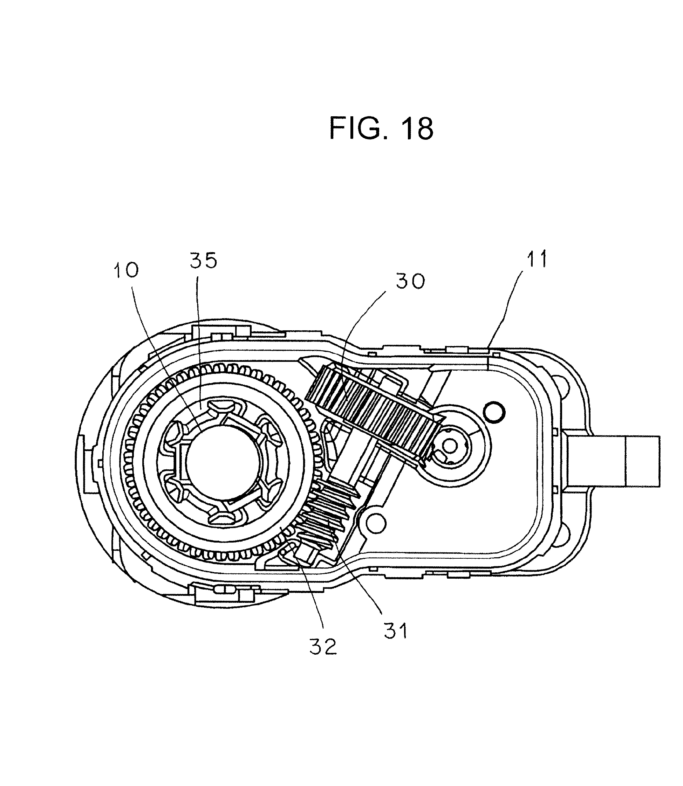

Then, the gear case 11 is about to further rotate in the counterclockwise direction as seen from the top. Then, as shown in FIG. 18, a backlash between a clutch gear 32 and a second worm gear 31 narrows, a gap in a thrust direction of the second worm gear 31 narrows, and a gap in engagement between the shaft 10 and the clutch holder 35 narrows.

The clutch holder 35 is engaged with the shaft 10 in a rotation disable manner; and therefore, as shown in FIG. 17 (C) and FIG. 20, the clutch protrusive portion 40 of the clutch 47 on the side of the gear case 11 runs on the clutch recessed portion 41 of the clutch holder 35 on a fixed side of the shaft 10 and then the clutch protrusive portion 40 of the clutch 47 and the clutch recessed portion 41of the clutch holder 35 disengage from each other. At this time, the clutch holder 35 moves (rises) against the spring force of the spring 36.

As a result, the gear case 11 (including the cover 12, the motor 13, the deceleration mechanism 14, the bearing member 16, and clutch gear 32) rotates in the counterclockwise direction as seen from the top. In this manner, as shown in FIG. 1, the mirror assembly 4 rotates from the use location A to the forward tilt location C in the counterclockwise direction as seen from the top and then is positioned in the forward tilt location C at a time point at which one abutment face 22 of the archery protrusive portion 21 of the shaft holder 9 abuts against one abutment face 25 of the arc groove 24 of the gear case 11.

When the mirror assembly 4 rotates from the use location A to the forward tilt location C in the counterclockwise direction as seen from the top, the tapered top face 51 of the outside protrusion 50 of the stopper member 6 and the tapered bottom face 55 of the gear case 11 are respectively established in a noncontact state; and therefore, the mirror assembly 4 can be rotated in the forward tilt location C without applying a load to the electrically driven storage unit 3.

In this forward tilt state, a switch (not shown) in the room of an automobile is operated, and the motor 13 is driven. A rotation force of the motor 13 is then transmitted to the clutch gear 32 that is fixed to the shaft 10, via an output shaft and the deceleration mechanism 14. The gear case 11 mounted to the mirror assembly 4 (the gear case including the cover 12, the motor 13, the deceleration mechanism 14, the bearing member 16, and the clutch gear 32) then rotates in the clockwise direction as seen from the top (in an opposite direction to the direction indicated by the arrow drawn by the solid line in FIG. 17, FIG. 19, or FIG. 20); and therefore, as shown in FIG. 1, the mirror assembly 4 rotates from the forward tilt location C to the use location A in the clockwise direction as seen from the top.

After that, the clutch protrusive portion 40 of the clutch gear 32 and the clutch recessed portion 41 of the clutch holder 35 first engage with each other and then the clutch mechanism 15 is established in an engaged state. The engagement protrusive portion 38 of the stopper member 6 and the engagement recessed portion 45 of the gear case 11 then engage with each other and then the stopper member 6 and the gear case 11 are established in a state in which they are integrated with each other. As a result, as shown in FIG. 1, the mirror assembly 4 is positioned in the use location A.

When the mirror assembly 4 rotates from the forward tilt location C to the use location A in the counterclockwise direction as seen from the top, the tapered top face 51 of the outside protrusion 50 of the stopper member 6 and the tapered bottom face 55 of the gear case 11 are respectively established in a noncontact state; and therefore, the mirror assembly 4 can be electrically driven to be rotated in the use location A.

It is to be noted that as shown in FIG. 1, the mirror assembly 4 that is positioned in the forward tilt location C is manually rotated in the clockwise direction as seen from the top, whereby the mirror assembly 4 can also be rotated from the forward tilt location C to the use location A in the clockwise direction as seen from the top.

Further, a description will be given with respect to a case in which the mirror assembly 4 that is positioned in the use location A is tilted in the storage location B for the sake of buffering, as shown in FIG. 1. A force in the clockwise direction as seen from the top, which is greater than an electrically driven rotation force (a manual force or a force generated when something hits the mirror assembly 4), is applied to the mirror assembly 4 that is positioned in the use location A. Then, the gear case 11 that is mounted to the mirror assembly 4 is about to rotate in the clockwise direction as seen from the top. At this time, one stopper face 33 of the stopper member 6 abuts against one stopper face 43 of the shaft holder 9, and the other stopper face 34 of the stopper member 6 does not abut against the other stopper face 44 of the shaft holder 9; and therefore, the stopper member 6 is not fixed to the shaft holder 9 in the clockwise direction as seen from the top, enabling rotation in this direction (in the clockwise direction as seen from the top).

Therefore, in a state in which the engagement protrusive portion 38 of the stopper member 6 and the engagement recessed portion 45 of the gear case 11 engage with each other, the stopper member 6 and the gear case 11 are about to rotate in the clockwise direction as seen from the top with respect to the shaft holder 9. At this time, the clutch holder 35 is engaged with the shaft 10 in a rotation disable manner; and therefore, the clutch protrusive portion 40 of the clutch 47 on the side of the gear case 11 runs on the clutch recessed portion 41 of the clutch holder 35 on the fixed side of the shaft 10 and then the clutch protrusive portion 40 of the clutch 47 and the clutch recessed portion 41 of the clutch holder 35 disengage from each other. At this time, the clutch holder 35 moves (rises) against the spring force of the spring 36.

As a result, the gear case 11 (including the cover 12, the motor 13, the deceleration mechanism 14, the bearing member 16, and the clutch gear 32) rotates in the clockwise direction as seen from the top. In this manner, as shown in FIG. 1, the mirror assembly 4 rotates from the use location A to the storage location B in the clockwise direction as seen from the top and then the other abutment face 22 of the archery protrusive portion 21 of the shaft holder 9 abuts against the other abutment face 25 of the arc groove 24 of the gear case 11. As a result, the stopper member 6 is fixed to the shaft holder 9, and rotation of the stopper member 6 stops. In addition, rotation of the gear case 11 of which the engagement recessed portion 45 engages with the engagement protrusive portion 38 of the stopper member 6 also stops similarly. As a result, the mirror assembly 4 stops and is positioned in the storage location B as a predetermined location shown in FIG. 1.

When this mirror assembly 4 is rotating from the use location A to the storage location B, the holding mechanism is established in a noncontact state with respect to the shaft 10 and the gear case 11. Therefore, the mirror assembly 4 can be smoothly rotated from the use location A to the storage location B without applying a load to the electrically driven storage unit 3.

As shown in FIG. 1, the mirror assembly 4 that is positioned in the storage location B is then rotated by means of an electrically driven rotation force or a manual force in the counterclockwise direction as seen from the top. The gear case 11 mounted to the mirror assembly 4 (the gear case including the cover 12, the motor 13, the deceleration mechanism 14, the bearing member 16, and the clutch gear 32) then rotates in the counterclockwise direction as seen from the top; and therefore, as shown in FIG. 1, the mirror assembly 4 rotates from the storage location B to the use location A in the counterclockwise direction as seen from the top.

The clutch protrusive portion 40 of the clutch gear 32 and the clutch recessed portion 41 of the clutch holder 35 then engage with each other, and the clutch mechanism 15 is established in an engaged state. As a result, as shown in FIG. 1, the mirror assembly 4 is positioned in the use location A.

### (Description of Advantageous Effects)

The electrically driven storage type door mirror device 1 in the first exemplary embodiment is made of the constituent elements and functions described above, and hereinafter, advantageous effects thereof will be described.

As far as the electrically driven storage type door mirror device 1 in the embodiment is concerned, in a range in which the mirror assembly 4 rotates between the use location A and the storage location B, the holding mechanism is established in a noncontact state with respect to the shaft 10 and the gear case 11. In other words, as shown in FIG. 4, FIG. 6, and FIG. 8, the tapered side face 49 of the inside protrusion 48 of the stopper member 6 and the tapered side face 54 of the protrusion 53 of the shaft 10 are respectively established in a noncontact state. In addition, the tapered top face 51 of the outside protrusion 50 of the stopper member 6 and the tapered bottom face 55 of the gear case 11 are respectively established in a noncontact state. As a result, the mirror assembly 4 can be smoothly rotated between the use location A and the storage location B without any load, and no load is applied to the electrically driven storage unit 3.

Moreover, as far as the electrically driven storage type door mirror 1 in the embodiment is concerned, in a range in which the mirror assembly 4 rotates between the use location A and the storage location B, the holding mechanism is established in a noncontact state with respect to the shaft 10 and the gear case 11. In other words, a gap is set between the stopper member 6 and the shaft 10, thus making it possible to fully faithfully follow a change in size of parts such as the stopper member 6 or the shaft 10, exerted by a temperature or humidity change.

As far as the electrically driven storage type door mirror 1 in the embodiment is concerned, when the mirror assembly 4 is positioned in the use location A, the holding mechanism is established in a contact state with respect to the shaft 10 and the gear case 11. In other words, as shown in FIG. 5 and FIG. 7, the tapered side face 49 of the inside protrusion 48 of the stopper member 6 and the tapered side face 54 of the protrusion 53 of the shaft 10 are respectively established in a contact state. In addition, the tapered top face 51 of the outside protrusion 50 of the stopper member 6 and the tapered bottom face 55 of the gear case 11 are respectively established in a contact state. As a result, the mirror assembly 4 is reliably held in the use location A without any vibration.

In this manner, the electrically driven storage type door mirror device 1 in the embodiment is compatible with hindering applying of a load to the electrically driven storage unit 3 and holding the mirror assembly 4 in such a manner as to be free of vibration.

As far as the electrically driven storage type door mirror 1 in the embodiment is concerned, if a force that is greater than a clutch force of the clutch mechanism 15 acts on the mirror assembly 4 by means of the clutch mechanism 15, the mirror assembly 4 rotates from the use location A to the side of the storage location B for the sake of buffering, or alternatively, to the side of the forward tilt location C that is opposite to the storage location B. Thus, the mirror assembly 4 can be protected from an impact. Moreover, as far as the electrically driven storage type door mirror 1 in the embodiment is concerned, when the mirror assembly 4 rotates for the sake of buffering, a contact state between the holding mechanism and the gear case 11 is released by means of a force that is equal to or smaller than a clutch force of the clutch mechanism 15 by means of an action of the buffering mechanism, and in other words, as shown in FIG. 8, the tapered top face 51 of the outside protrusion 50 of the stopper member 6 and the tapered bottom face 55 of the gear case 11 are respectively established in a noncontact state; and therefore, the mirror assembly 4 can be electrically driven to be rotated from the forward tilt location C to the use location A, or alternatively, from the storage location B to the use location A, without applying a load to the electrically driven storage unit 3.

### (Description of Examples Other Than Exemplary Embodiments)

In the foregoing first and second exemplary embodiments, an electrically driven storage type door mirror device has been described. However, the present invention can also be applied to a vehicle outside mirror device other than the electrically driven storage type door mirror. For example, the present invention can be applied to a vehicle outside mirror device of an electrically driven storage type, such as a vehicle fender mirror device of electrically driven storage type.

In addition, in the foregoing embodiment, a clutch protrusive portion 40 is provided in a clutch gear 32, and a clutch recessed portion 41 is provided in a clutch holder 35. However, in the present invention, a clutch recessed portion may be provided in a clutch, and a clutch protrusive portion may be provided in a clutch holder, or alternatively, a clutch protrusive portion and a clutch recessed portion may be provided in a clutch, and a clutch recessed portion and a clutch protrusive portion may be provided in a clutch holder.

Further, in the foregoing embodiment, an engagement protrusive portion 38 is provided in a stopper member 6, and an engagement recessed portion 45 is provided in a gear case 11. However, in the present invention, an engagement recessed portion may be provided in a stopper member, and an engagement protrusive portion may be provided in a gear case, or alternatively, an engagement protrusive portion and an engagement recessed portion may be provided in a stopper member, and an engagement recessed portion and an engagement protrusive portion may be provided in a gear case.

Furthermore, in the foregoing embodiment, two stopper protrusive portions 28 are provided on a bottom face of a stopper member 6, and two stopper protrusive portions 42 are provided on a top face of a shaft holder 9, whereby its related rigidity is improved, which is preferable. However, in the present invention, the number of stopper protrusive portions 28 and the number of stopper protrusive portions 42 are not limited in particular.

Still furthermore, in the foregoing embodiment, a tapered side face 49 of an inside protrusion 48 of a stopper member 6 and a tapered top face 51 of an outside protrusion 50, a tapered side face 54 of a protrusion 53 of a shaft 10, and a tapered bottom face 55 of a gear case 11 are respectively provided on three by three pieces basis. However, in the present invention, the tapered side face 49 of the inside protrusion 48 of the stopper member 6 and the tapered top face 51 of the outside protrusion 50, the tapered side face 54 of the protrusion 53 of the shaft 10, and the tapered bottom face 55 of the gear case 11 may be respectively provided on a one by one piece basis, on a two by two pieces basis, or on a four by four or more pieces basis.

## Claims

1. A vehicle outside mirror device in which a mirror assembly is rotatably mounted to a vehicle body via an electrically driven storage unit and a base, wherein
the electrically driven storage unit comprising:
a shaft that is fixed to the base;
a casing which is rotatably mounted to the shaft, and to which the mirror assembly is mounted;
a motor and a rotation force transmission mechanism that are housed in the casing, and electrically drive the mirror assembly to rotate at least between a use location and a storage location with respect to the shaft;
an electrically driven rotation range restricting mechanism adapted to restrain a range of electrically driven rotation of the mirror assembly between the use location and the storage location;
a clutch mechanism that is provided in the rotation force transmission mechanism, the clutch mechanism being disallowed to be disengaged with an electrically driven rotation force of the motor and the rotation force transmission mechanism, the clutch mechanism being allowed to be disengaged by means of a force that is greater than the electrically driven rotation force so as to enable the mirror assembly to rotate with respect to the shaft; and
a holding mechanism that is provided between the shaft and the casing, the holding mechanism being established in a noncontact state with respect to the shaft and the casing in a range in which the mirror assembly rotates between the use location and the storage location, the holding mechanism being established in a contact state with respect to the shaft and the casing so as to hold the mirror assembly in the use location when the mirror assembly is positioned in the use location.

2. The vehicle outside mirror device according to claim 1, comprising a buffering mechanism adapted to release a contact state between the holding mechanism and the casing by means of a force that is greater than the electrically driven rotation force and that is smaller than a clutch force of the clutch mechanism when the mirror assembly is rotated from the use location to the storage location side or on an opposite side to the storage location for a sake of buffering.
